# EUROPEAN PATENT APPLICATION

(11) **EP 4 831 816 A1**
(43) Date of publication of application: **28.10.2026**
(21) Application number: 26174247.2
(22) Date of filing: 23.04.2026
(51) Int. Cl.: G06F 12/0811, G06F 12/084, G06F 12/0842

(54) **PERFORMING CACHE IDLE BALANCING USING CACHE DOMAINS**

(30) Priority: 23.04.2025 US 202519187888
(71) Applicant: VMware LLC, Palo Alto, CA 94304 (US)
(72) Inventor: Gadepalli, Phani Kishore, Tracy, 95377 (US); Zheng, Haoqiang, Palo Alto, 94306 (US); Hao, Yifan, San Mateo, 94403 (US); Venkatasubramanian, Rajesh, San Jose, 95121 (US)
(74) Representative: Dilg, Haeusler, Schindelmann Patentanwaltsgesellschaft mbH

(57) **Abstract**

A host computer is configured to perform cache idle balancing, by performing the steps of: checking, by a first processing core in a first cache domain, if any job queues that are associated with processing cores in the first cache domain other than the first processing core include ready tasks, and determining that none of the job queues for the first cache domain checked by the first processing core include ready tasks; selecting, by the first processing core, a second cache domain that shares a first LLC with the first cache domain; checking, by the first processing core, if job queues associated with processing cores in the second cache domain include ready tasks, and determining that a first job queue associated with one of the processing cores in the second cache domain includes a first ready task; and executing the first ready task on the first processing core.

## Description

### Background

Processors execute load balancers to optimize performance and resource utilization across their processing cores. One functionality of a load balancer is cache idle balancing, also referred to herein as "work stealing." As used herein, cache idle balancing is a process by which when one processing core is idle, the load balancer moves tasks from a job queue of a busy processing core to the idle processing core. The idle processing core thus "steals" a task from a busy processing core that is ready to be executed. A processing core that is currently performing cache idle balancing functionalities is referred to herein as a "cache idle balancer."

As the number of processing cores on processors increases, the amount of time it takes for processing cores to steal work increases as well. This is due to various factors. For example, with an increasing number of processing cores, there is also an increasing number of processing cores that become idle. There is thus an increasing number of processing cores attempting to become cache idle balancers in order to steal work. This creates administrative bottlenecks such as when one idle processing core must wait several processing cycles before a lock associated with cache idle balancing becomes available to take. Accordingly, there is a desire to implement a more scalable system for performing cache idle balancing.

### Summary

One or more embodiments provide a host computer including one or more processors and memory, wherein the one or more processors include a plurality of last-level caches (LLCs), each of the LLCs being associated with a plurality of cache domains. The one or more processors execute instructions stored in the memory to perform cache idle balancing. By executing such instructions, the one or more processors perform the steps of: checking, by a first processing core in a first cache domain of the cache domains, if any job queues that are associated with processing cores in the first cache domain other than the first processing core include ready tasks, and determining that none of the job queues for the first cache domain checked by the first processing core include ready tasks; selecting, by the first processing core in response to determining that none of the job queues for the first cache domain checked by the first processing core include ready tasks, a second cache domain that shares a first LLC of the LLCs with the first cache domain; checking, by the first processing core, if job queues associated with processing cores in the second cache domain include ready tasks, and determining that a first job queue associated with one of the processing cores in the second cache domain includes a first ready task; and removing the first ready task from the first job queue, and executing the first ready task on the first processing core.

Further embodiments include a method comprising the above steps and a non-transitory computer-readable storage medium comprising instructions that cause a host computer to carry out the above steps.

### Brief Description of the Drawings

Figure 1 is a block diagram of a host computer in which embodiments may be implemented.
Figure 2 is a flow diagram of a method that may be performed by the host computer to perform cache idle balancing, according to some embodiments.
Figure 3 is a flow diagram of a method that may be performed by the host computer to maintain assignment of a cache idle balancing role, according to some embodiments.
Figure 4 is a flow diagram of another method that may be performed by the host computer to maintain assignment of the cache idle balancing role, according to some embodiments.

### Detailed Description

Techniques are described for performing cache idle balancing. According to embodiments, one or more processors are divided into a plurality of groups for cache idle balancing, each group referred to herein as a "cache domain." Each cache domain includes a plurality of processing cores, also referred to herein simply as "cores." As used herein the term "processing core" or "core" may refer to either a physical core or a logical core. A physical core is an actual hardware unit in a processor that processes instructions and performs computations. A logical core is a virtual (software) representation of a physical core, created by technology such as hyperthreading, that enables a physical core to perform multiple tasks at once. For example, a physical core may simultaneously support and perform tasks for two logical cores. As used herein, a "task" is a unit of work such as a thread or process that is executable by a core.

According to embodiments, cache domains are assigned to last-level caches (LLCs). An LLC is a final cache level in a processor hierarchy, typically being larger than other cache levels but slower for accessing data. For example, a processor may include a level 1 (L1) cache, which is a smallest and fastest cache of the processor, a level 2 (L2) cache, which is larger but slower than the L1 cache, and a level 3 (L3) cache as the LLC. Multiple cache domains may be assigned to the same LLC such that cores in different cache domains access data from the same LLC, i.e., share the LLC.

According to embodiments, cache idle balancing is performed at the granularity of cache domains. At any time, each cache domain may include a cache idle balancer trying to steal tasks to execute. Accordingly, even with an increasing number of cores on a processor, the scale of performing cache idle balancing may be prevented from becoming excessively large. While the number of idle cores in a processor may increase as processors include more total cores, the number of idle cores in a single cache domain may remain consistent as long as those processors are divided such that the number of cores per cache domain does not become excessively large. This prevents the scalability bottlenecks discussed above and allows idle cores to more quickly steal work from busy cores.

Additionally, embodiments make use of data locality to make cache idle balancing more efficient. For example, when an idle core becomes a cache idle balancer, it may first check if there are tasks to steal from other cores in its own local cache domain. If not, the cache idle balancer may then check if there are tasks to steal from other cores in another cache domain that is sharing the same LLC. Finally, the cache idle balancer may check if there are tasks to steal in another cache domain that is assigned to a different LLC. Such a framework allows cache idle balancers to prioritize stealing tasks that may benefit, e.g., from being able to continue accessing cached data after being moved to a new core. These and further aspects of the invention are discussed below with respect to the drawings.

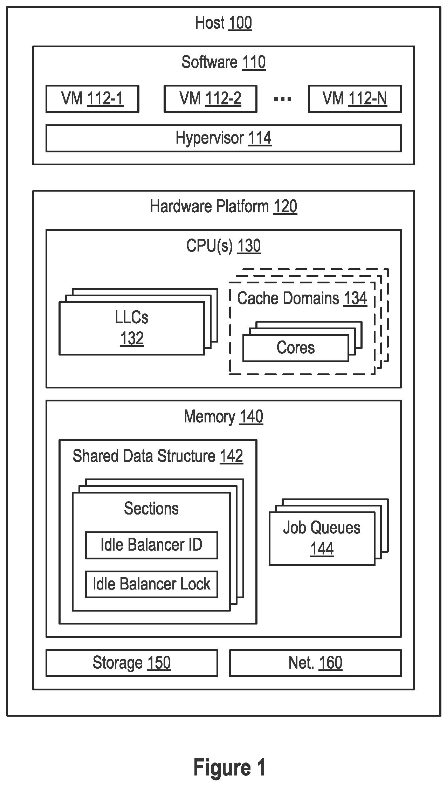

Figure 1 is a block diagram of a host computer 100, also referred to herein simply as a "host," in which embodiments may be implemented. Host 100 is constructed on a hardware platform 120 such as an x86 architecture platform. Hardware platform 120 includes components of a computer, such as one or more central processing units (CPUs) 130, memory 140 such as random-access memory (RAM), local storage 150 such as one or more magnetic drives or solid-state drives (SSDs), and networking hardware 160 such as one or more network interface controllers (NICs). CPU(s) 130 are configured to execute instructions such as executable instructions that perform one or more operations described herein, which may be stored in memory 140. Using networking hardware 160, host 100 may communicate with other devices over a network (not shown) such as a local area network (LAN).

CPU(s) 130 include a plurality of caches such as LLCs 132, which may be, e.g., L3 caches. Additionally, CPU(s) 130 are divided into cache domains 134, each of which includes a plurality of cores. For example, cores of cache domains 134 may include logical cores supported by physical cores. On the other hand, cores of cache domains 134 may be limited to physical cores. Each of cache domains 134 is assigned to one of LLCs 132. Furthermore, multiple of cache domains 134 may be assigned to the same ones of LLCs 132, i.e., each of LLCs 132 may be shared by a plurality of cache domains 134 such that cores in different ones of cache domains 134 access data in the same one of LLCs 132.

Various mechanisms are envisioned for dividing CPU(s) 130 into cache domains 134. For example, a boot option may be set in firmware of host 100 indicating to how to divide CPU(s) 130. For example, such boot option may indicate a number of cache domains 134 for each of LLCs 132, e.g., 2 of cache domains 134 per one of LLCs 132. CPU(s) 130 may then create the desired number of cache domains 134 for each of LLCs 132 and assign cores to cache domains 134 accordingly. As another example, such boot option may indicate a number of cores to assign to each of cache domains 134, e.g., 32 cores per one of cache domains 134. CPU(s) 130 may then create cache domains 134 and assign the desired number of cores to each of cache domains 134.

It should be noted that CPU(s) 130 may each be divided into a plurality of dies. A die is a physical component of a CPU that houses physical cores, and a single one of CPU(s) 130 may include a plurality of dies, also referred to as "chiplets." Such dies may divide each of LLCs 132 into a plurality of "LLC slices." In such case, for example, each die may include a plurality of cache domains 134. In other words, the assignment of cache domains 134 to LLCs 132 is not limited by the presence of multiple dies on each of CPU(s) 130, so multiple of cache domains 134 may be assigned to the same LLC slice.

Memory 140 includes a shared data structure 142 and a plurality of job queues 144. Shared data structure 142 is a data structure that is accessible to cores of all of cache domains 134 and that may be used for performing cache idle balancing functionalities. Host 100 may generate shared data structure 142 and divide it into a plurality of sections, each of which corresponds to one of cache domains 134. As just some examples, at the software level, shared data structure 142 may be an array of structs in which each struct corresponds to a different section, a hash map in which each key maps to a different section, or a tree data structure in which each node corresponds to a different section.

Host 100 may store, in each section of shared data structure 142, an idle balancer identifier (ID) and an idle balancer lock. The idle balancer ID identifies a core in one of cache domains 134 corresponding to the section of shared data structure 142. Such core is currently assigned the role of performing cache idle balancing. For example, only one core may be assigned such role at a time for each of cache domains 134. The idle balancer lock is a locking mechanism such as spin lock that may be used by cores of cache domains 134 for synchronizing cache idle balancing functionalities, as discussed further below. It should be noted that although shared data structure 142 is divided into sections, cores of any of cache domains 134 may access any of the sections.

Job queues 144 are data structures associated with cores of CPU(s) 130. Job queues 144 are used to manage tasks that are to be processed by corresponding ones of the cores. For example, each of job queues 144 may correspond to one physical core of CPU(s) 130. If CPU(s) 130 support logical cores, logical cores supported by the same physical core may share corresponding ones of job queues 144.

Hardware platform 120 supports software 110. Software 110 may include a hypervisor 114, which is a software layer or component that supports the execution of multiple virtual machines (VMs) 112. One example of hypervisor 114 is a VMware ESX^{®} hypervisor, available from VMware LLC. A VM is a software emulation of a host including its own guest operating system (OS) that may support one or more workloads. VMs share the hardware resources of the hosts on which they execute, including the processing, memory, storage, and networking resources. A VM is an example of a virtualized computing instance, which is an addressable data compute node (DCN) or isolated user space instance. Although the disclosure is described with reference to VMs, the teachings herein also apply to nonvirtualized workloads and to other types of virtualized computing instances such as containers.

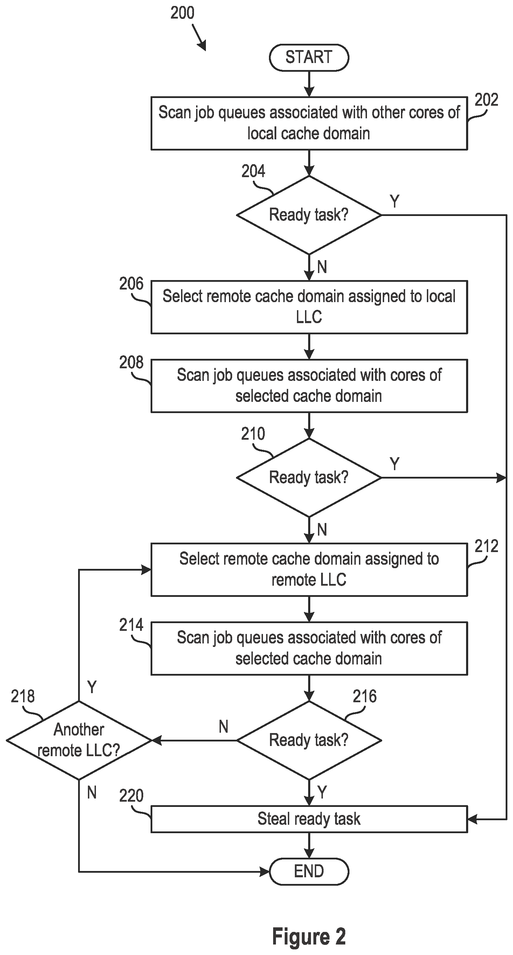

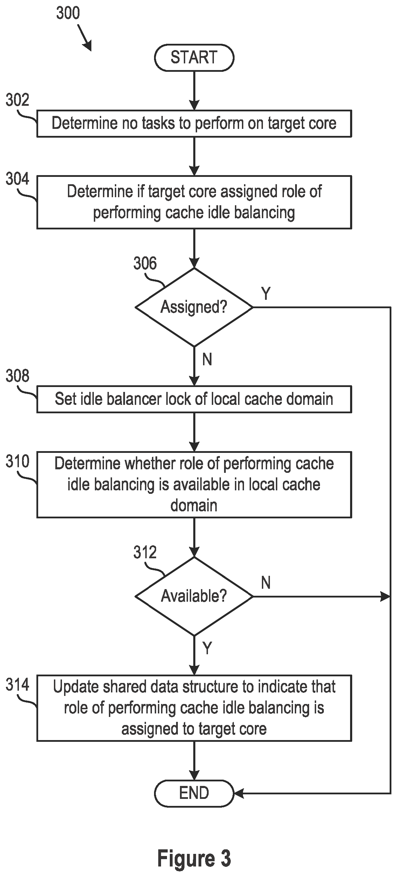

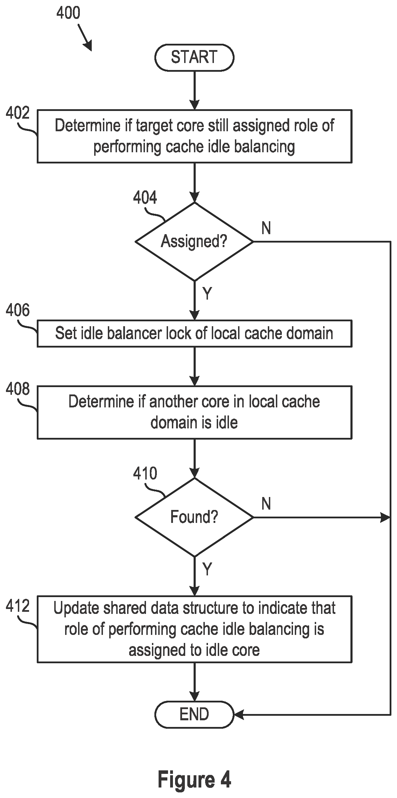

Figure 2 is a flow diagram of a method 200 that may be performed by host 100 to perform cache idle balancing, according to some embodiments. Method 200 may be performed by one of the cores of CPU(s) 130 upon becoming a cache idle balancer, which may occur, e.g., upon the core determining that it has no tasks to perform, i.e., is idle or is becoming idle. Steps for becoming a cache idle balancer are discussed further below in conjunction with Figures 3 and 4.

As used in the description of method 200, the core that has become a cache idle balancer is referred to as a "target core." Additionally, one of cache domains 134 that the target core is in, is referred to as the "local cache domain." Others of cache domains 134 are referred to as "remote cache domains." Additionally, one of LLCs 132 that the local cache domain is assigned to is referred to as the "local LLC." Others of LLCs 132 are referred to as "remote LLCs."

At step 202, the target core scans job queues 144 associated with other cores of the local cache domain. For example, if the target core is a logical core that shares one of job queues 144 with another logical core, such scan may include all of job queues 144 associated with physical cores of the local cache domain. On the other hand, if the target core does not share one of job queues 144, such scan may exclude the one of job queues 144 associated therewith. During the scan, the target core searches for a ready task that it can steal. As used herein, a "ready task" is a task that is currently executable, e.g., not waiting on an event or resource, but that is not currently running because the core that it has been assigned to is busy with other tasks.

At step 204, if the target core finds a ready task, method 200 moves to step 218. Otherwise, after scanning all of job queues 144 associated with other cores of the local cache domain, if the target core does not find a ready task, method 200 moves to step 206. At step 206, the target core selects a remote cache domain that is also assigned to the local LLC. For example, there may be multiple remote cache domains associated with the local LLC. In such case, the target core may select one of the remote cache domains by using a pseudorandom number generator algorithm to generate a pseudorandom number and then selecting one of the remote cache domains based on the generated number. Examples of pseudorandom number generator algorithms include the Mersenne Twister algorithm, Xorshift algorithms, and other similar algorithms.

At step 208, the target core scans job queues 144 associated with cores of selected remote cache domain for ready tasks. At step 210, if the target core finds a ready task, method 200 moves to step 218. Otherwise, after scanning all of job queues 144 associated with cores of the selected remote cache domain, if the target core does not find a ready task, method 200 moves to step 212. At step 212, the target core selects a remote cache domain that is assigned to a remote LLC. For example, there may be multiple remote LLCs. In such case, the target core may select one of the remote LLCs by using a pseudorandom number generator algorithm to generate a pseudorandom number and then selecting one of the remote LLCs based on the generated number. The target core may then select one of the remote cache domains assigned to the selected remote LLC, e.g., by using a pseudorandom number generator algorithm to generate a pseudorandom number and then selecting one of the remote cache domains based on the generated number.

At step 214, the target core scans job queues 144 associated with cores of the selected remote cache domain for ready tasks. At step 216, after scanning all of job queues 144 associated with cores of the selected remote cache domain, if the target core does not find a ready task, method 200 moves to step 218. At step 218, if there is another remote LLC for which the target core has not searched for ready tasks to steal, method 200 returns to step 212, the target core selects a remote cache domain that is assigned to another remote LLC, and the target core scans job queues 144 associated with cores of the selected remote cache domain for ready tasks. Otherwise, at step 218, if there are no more remote LLCs to search, method 200 ends, and the target core may repeat the steps of method 200, e.g., after waiting a predetermined time period.

Returning to step 216, if the target core finds a ready task, method 200 moves to step 220. At step 220, the target core steals a located task from another core, which may be a core from the local cache domain, a core from a remote cache domain assigned to the local LLC, or a core from a remote cache domain assigned to a remote LLC. In particular, host 100 removes the ready task from one of job queues 144 from which the task was located. Host 100 then executes the ready task on the target core. After step 220, method 200 ends.

It should be noted that at steps 210 and 216, the target core may perform various optimizations before determining to steal a ready task from a remote cache domain. For example, the target core may first determine that there is currently no core in the remote cache domain that is performing the role of cache idle balancing. This is to avoid stealing a task that may otherwise be stolen by a cache idle balancer in the remote cache domain. It may be preferable for the other cache idle balancer to steal such task because it would result in less cache misses after the ready task is executed on a different core.

For example, to determine if another core is currently performing the role of cache idle balancing, the target core may first determine which other core is currently assigned that role by reading the idle balancer ID of a section of shared data structure 142 corresponding to the remote cache domain. The target core may then determine whether that other core is currently idle, which the target core may determine by scanning one of job queues 144 associated with the other core. If the other core is idle, the target core may determine that the other core is currently performing the role. Otherwise, the target core may determine that the other core is not currently performing the role.

It should also be noted that various stopping conditions may be applied for determining when to stop searching for ready tasks to steal. For example, the target core may search until it has checked job queues 144 for a predetermined number of total cores. Once the target core has reached such number, if the target core has not yet found a ready task to steal, the target core may stop performing cache idle balancing functionalities. The target core may then perform steps of method 200 again after waiting a predetermined time period.

Figure 3 is a flow diagram of a method 300 that may be performed by host 100 to maintain assignment of a cache idle balancing role, according to some embodiments. As used in the description of method 300, a core performing various method steps is referred to as a "target core." One of cache domains 134 that the target core is in, is referred to as the "local cache domain." At step 302, the target core determines that it has no tasks to perform. For example, the target core may determine this by scanning one of job queues 144 associated therewith. As another example, shared data structure 142 may include variables indicating which of job queues 144 are idle. Accordingly, the target core may check a variable for one of job queues 144 associated with the target core to determine if it is idle.

At step 304, the target core determines if it is currently assigned the role of performing cache idle balancing. To do so, the target core may read the idle balancer ID from the section of shared data structure 142 corresponding to the local cache domain. If the idle balancer ID includes an ID of the target core, the target core may determine that it is currently assigned the role of performing cache idle balancing. Otherwise, the target core may determine that it is not currently assigned the role.

At step 306, if the target core determines it has been assigned the role, method 300 ends. Otherwise, method 300 moves to step 308. At step 308, the target core sets the idle balancer lock of the local cache domain in shared data structure 142, to indicate that the idle balancer lock is taken. If the idle balancer lock is already indicated as being taken, the target core may wait until the idle balancer lock is indicated as free, and then the target core may set the idle balancer lock. For example, if the idle balancer lock is a spin lock, the target core may spin until the idle balancer lock is indicated as free. Setting the idle balancer lock may include updating the idle balancer lock to a value that represents being taken.

At step 310, the target core determines whether the role of performing cache idle balancing is available in the local cache domain. For example, the target core may determine whether another core that is currently assigned the role, is currently idle. The target core may determine this by scanning one of job queues 144 associated with the other core or by checking a variable associated with the one of job queues 144. If the other core is currently idle, the target core may determine that the role is not available because the other core is presumably looking for other work to steal. Otherwise, the target core may determine that the role is available because the other core is presumably no longer looking for other work to steal.

At step 312, if the role of performing cache idle balancing is determined to be not to be available, method 300 ends. Otherwise, if the role is determined to be available, method 300 moves to step 314. At step 314, the target core updates the section of shared data structure 142 corresponding to the local cache domain to indicate that the role of performing cache idle balancing is assigned to the target core. In particular, the target core may store, in the idle balancer ID of the section, an ID of the target core. After step 314, method 300 ends. It should be noted that after method 300 ends, if the target core set an idle balancer lock at step 308, the target core may release the idle balancer lock, e.g., by updating it to a value that represents being free.

Figure 4 is a flow diagram of a method 400 that may be performed by host 100 to maintain assignment of a cache idle balancing role, according to some embodiments. As used in the description of method 400, a core performing various method steps is referred to as a "target core." One of cache domains 134 that the target core is in, is referred to as the "local cache domain." For example, method 400 may be performed by the target core after performing the role of cache idle balancing to steal a task from another core, i.e., after being a cache idle balancer.

At step 402, the target core determines if it is still assigned the role of performing cache idle balancing. The target core may determine this by reading the idle balancer ID from the section of shared data structure 142 corresponding to the local cache domain. If the idle balancer ID still includes an ID of the target core, the target core may determine that it is still assigned the role of performing cache idle balancing. Otherwise, the target core may determine that it is no longer assigned the role. It should be noted that the target core may have been assigned the role before performing steps for stealing a task from another core. However, thereafter, another core in the local cache domain may have updated the idle balancer ID in shared data structure 142, as discussed above in conjunction with Figure 3.

At step 404, if the target core determines it is no longer assigned the role, method 400 ends. Otherwise, method 400 moves to step 406. At step 406, the target core sets the idle balancer lock of the local cache domain in shared data structure 142, e.g., by updating it to a value that represents being taken. At step 408, the target core determines if another core in the local cache domain is idle. The target core may determine this by scanning job queues 144 associated with other cores of the local cache domain or by checking variables associated with job queues 144.

At step 410, if the target core does not find an idle core, method 400 ends. Otherwise, method 400 moves to step 412. At step 412, the target core updates the section of shared data structure 142 corresponding to the local cache domain to indicate that the role of performing cache idle balancing is assigned to an idle core located at step 408. In particular, the target core may store, in the idle balancer ID of the section, an ID of the idle core. After step 412, method 400 ends. It should be noted that after method 400 ends, if the target core set the idle balancer lock at step 406, the target core may release the idle balancer lock, e.g., by updating it to a value that represents being free.

It should also be noted that various policies may be applied with respect to the assignment of the role of performing cache idle balancing beyond merely assigning it to an idle core. For example, if CPU(s) 130 support logical cores, there may be idle logical cores on multiple physical cores of the local cache domain. However, there may only be one physical core for which multiple logical cores thereon are idle. In such case, the target core may assign the role of performing cache idle balancing to one of the logical cores on the physical core that has multiple idle logical cores.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of performing cache idle balancing in a host computer that includes one or more processors, wherein the one or more processors include a plurality of last-level caches (LLCs), each of the LLCs being associated with a plurality of cache domains, the method comprising:
checking, by a first processing core in a first cache domain of the cache domains, if any job queues that are associated with processing cores in the first cache domain other than the first processing core include ready tasks, and determining that none of the job queues for the first cache domain checked by the first processing core include ready tasks;
selecting, by the first processing core in response to determining that none of the job queues for the first cache domain checked by the first processing core include ready tasks, a second cache domain that shares a first LLC of the LLCs with the first cache domain;
checking, by the first processing core, if job queues associated with processing cores in the second cache domain include ready tasks, and determining that a first job queue associated with one of the processing cores in the second cache domain includes a first ready task; and
removing the first ready task from the first job queue, and executing the first ready task on the first processing core.

2. The method of claim 1, further comprising:
checking, by a second processing core in the first cache domain, if any job queues associated with processing cores in the first cache domain other than the second processing core include ready tasks, and determining that none of the job queues for the first cache domain checked by the second processing core include ready tasks;
selecting, by the second processing core in response to determining that none of the job queues for the first cache domain checked by the second processing core include ready tasks, a third cache domain that shares the first LLC with the first and second cache domains;
checking, by the second processing core, if any job queues associated with processing cores in the third cache domain include ready tasks, and determining that none of the job queues for the third cache domain checked by the second processing core include ready tasks;
selecting, by the second processing core in response to determining that none of the job queues for the third cache domain checked by the second processing core include ready tasks, a fourth cache domain that is assigned to a second LLC of the LLCs;
checking, by the second processing core, if job queues associated with processing cores in the fourth cache domain include ready tasks, and determining that a second job queue associated with one of the processing cores in the fourth cache domain includes a second ready task; and
removing the second ready task from the second job queue, and executing the second ready task on the second processing core.

3. The method of claim 1 or 2, further comprising:
generating a shared data structure with a plurality of sections respectively associated with the plurality of cache domains, each of the sections including an identifier of a processing core to which a role of performing cache idle balancing is assigned.

4. The method of claim 3, further comprising:
reading, by the first processing core before checking if any of the job queues associated with the processing cores in the first cache domain other than the first processing core include ready tasks, a section of the shared data structure associated with the first cache domain, and determining either (1) that the role of performing cache idle balancing is assigned to the first processing core or (2) that the role of performing cache idle balancing is available for being assigned to the first processing core.

5. The method of claim 3 or 4, further comprising:
setting, by the first processing core, a lock in a section of the shared data structure associated with the first cache domain, to indicate that the lock is taken; and
updating, by the first processing core while the lock is indicated as being taken, the section to indicate that the role of performing cache idle balancing is assigned to the first processing core.

6. The method of any one of the claims 3 to 5, further comprising:
determining, by the first processing core, that a second processing core in the first cache domain is idle; and
updating, by the first processing core in response to determining that the second processing core is idle, a section of the shared data structure associated with the first cache domain, to indicate that the role of performing cache idle balancing is assigned to the second processing core.

7. The method of any one of the claims 3 to 6, further comprising:
reading, by the first processing core, from a section of the shared data structure associated with the second cache domain, and determining that none of the processing cores in the second cache domain are performing the role of cache idle balancing, the first ready task being removed from the first job queue in response to determining that none of the processing cores in the second cache domain are performing the role of cache idle balancing.

8. The method as set forth in any one of the preceding claims, further comprising:
determining, by the first processing core, that the first processing core has no tasks to perform, the first processing core checking if any of the job queues that are associated with the processing cores in the first cache domain other than the first processing core include ready tasks, in response to determining that the first processing core has no tasks to perform.

9. The method as set forth in any one of the preceding claims, further comprising:
determining, by the first processing core by using a pseudorandom number generator algorithm, to select the second cache domain from a plurality of cache domains that share the first LLC with the first cache domain.

10. The method as set forth in any one of the preceding claims,
wherein checking if any of the job queues that are associated with the processing cores in the first cache domain other than the first processing core include ready tasks, includes scanning the job queues that are associated with the processing cores in the first cache domain other than the first processing core, and
wherein checking if job queues associated with processing cores in the second cache domain include ready tasks, includes scanning job queues associated with processing cores in the second cache domain.

11. A host computer including one or more processors and memory, wherein the one or more processors include a plurality of last-level caches (LLCs), each of the LLCs being associated with a plurality of cache domains, and wherein the one or more processors execute instructions stored in the memory to carry out or to control a method as set forth in any one of the preceding method claims.

12. A non-transitory, computer-readable medium comprising instructions that are executable in a host computer that includes one or more processors, wherein the one or more processors include a plurality of last-level caches (LLCs), each of the LLCs being associated with a plurality of cache domains, and the instructions when executed causing the host computer to carry out a method as set forth in any one of the preceding method claims.
